# EUROPÄISCHE PATENTSCHRIFT

(11) **EP 1 520 813 B1**
(45) Veröffentlichungstag und Bekanntmachung des Hinweises auf die Patenterteilung: **13.08.2008**
(21) Anmeldenummer: 04013809.1
(22) Anmeldetag: 11.06.2004
(51) Int. Cl.: B65G 47/84, B67C 7/00

(54) **Behälterbehandlungsmaschine**
Container handling machine
Machine de traitement de récipients

(30) Priorität: 30.09.2003 DE 10345317
(43) Veröffentlichungstag der Anmeldung: 06.04.2005
(60) Teilanmeldung: 08010797.2
(73) Patentinhaber: KHS AG, 44143 Dortmund (DE)
(72) Erfinder: Till, Volker, 65719 Hofheim/Taunus (DE)

(56) Entgegenhaltungen:
- WO-A-01/42113
- DE-A- 3 713 016
- DE-C- 357 927
- GB-A- 809 592
- GB-A- 2 094 469
- JP-A- 11 322 066
- US-B1- 6 446 781

## Beschreibung

Die Erfindung betrifft eine Behälterbehandlungsmaschine mit einem Überleitarm gemäss dem Oberbegriff des Anspruchs I und wie bekannt aus der GB 809 592 A.

Behälterbehandlungsmaschinen sind z.B. Füllmaschinen, Verschließmaschinen, Rinser und dergleichen. Bei höherer Leistung werden sie in rotierender Bauart ausgebildet, wobei die die Behälter aufnehmenden Behandlungsplätze am Umfang eines so genannten Kreisels angeordnet sind und umlaufend die Behälter während der Behandlung mitnehmen.

Mit einem Halsring versehene Kunststoffbehälter werden dann, wenn sie leer sind oder sich innerhalb der Behandlungsmaschinen befinden, in der Regel durch so genanntes Neckhandling gehandhabt und/oder transportiert.

Die Zuführung der Behälter zu den Behandlungsmaschinen erfolgt i. d. R. durch bekannte Vorrichtungen zum Lufttransport derartiger Behälter. Innerhalb der Behandlungsmaschinen erfolgt der Transport anhand von Übergabe- oder Transportsternen, welche speziell für die Handhabung von mit einem Halsring versehenen Behältern ausgebildet sind.

Die Übergabe der Behälter vom Lufttransport, in welchem die Behälter ungeordnet und ohne feste Teilung transportiert werden, zu den Übergabe- oder Transportsternen, welche die Behälter geordnet und mit fester Teilung transportierten, erfolgt unter der Verwendung von bekannten Einlauf- oder Teilungsschnecken, welche die auf Stoß stehenden, durch den Lufttransport angeförderten Behälter vereinzeln, auf Teilung bringen und anschließend einem Übergabe- oder Transportstem zuführen.

Den nächsten Schritt stellt die Überführung der Behälter von einem Übergabestern zum Kreisel einer Behandlungsmaschine dar.

Die zur Lösung dieser Aufgabe erforderlichen konstruktiven Ausgestaltungen werden in starkem Maße durch die Art der Arretierung der Behälter während des Umlaufs mit dem Kreisel der Behandlungsmaschine bestimmt.

Werden die Behälter z.B. durch Greifer, welche an die Mündungsbereiche dieser Behälter bzw. an die Halsringe angreifen arretiert, so weisen i. d. R. auch die Übergabe- oder Einlaufsterne entsprechende Greifer auf, wobei die Übergabe der Behälter vom Einlaufstern zum Kreisel im Wesentlichen im scheinbaren Berührungspunkt beider Teilkreise erfolgt. Dabei sind die Freigabe durch den Einlaufstern und die Arretierung durch den Kreisel zeitlich und räumlich so aufeinander abgestimmt, so dass die Übergabe sicher, schnell und fehlerfrei erfolgt.

Werden die Behälter durch Greifer, welche am Körper der Behälter angreifen arretiert, so weisen die Einlaufsterne üblicher Weise keine Greiferelemente sondern so genannte Stemtaschen auf, welche die Behälter unter Mitwirkung von Außenführungen zunächst sicher führen und anschließend an die Greifer übergeben.

Nachteilig an den oben vorgestellten Vorrichtungen ist zunächst die große Anzahl der erforderlichen Bauteile und die mit diesen verbundenen hohen Herstell- und Wartungskosten.

Insbesondere bei der, immer größere Marktanteile gewinnenden, kaltaseptischen Abfüllung ergibt sich für derartige Vorrichtungen ein weiterer wesentlicher Nachteil, welcher darin besteht, dass ein großer Aufwand betrieben werden muss um derartige Vorrichtungen im laufenden Betrieb steril zu halten.

Zur Lösung u.a. dieses Problems sind von der Anmelderin weitere (EP 1 512 663 A) Schutzrechtsanmeldungen, z.B. Aktenzeichen 103 40 365.5 (EP 1 486 454 A) und Aktenzeichen 103 26 628.6 vorgelegt worden, welche sich in erster Linie mit kaltaseptischen Behälterbehandlungsmaschinen und dabei insbesondere mit der Reduzierung der Anzahl von Bauteilen und der Verkleinerung des erforderlichen Reinraumes befassen.

Bekannt ist weiterhin eine Behälterbehandlungsmaschine in Form einer Füllmaschine zum Füllen von Flaschen mit einem flüssigen Füllgut (GB 809 592 A). An einem um eine vertikale Maschinenachse umlaufenden Rotor oder Kreisel sind Aufnahmen für jeweils eine Flasche gebildet, die dort auf Flaschenträgern mit ihren Boden aufstehen und an ihrem Mündungsbereich zusätzlich gegen Umfallen abgestützt sind. Die Flaschen werden dem Kreisel über einen Einlaufstern mit einer Vielzahl von zum Umfang hin offenen und jeweils eine Flaschenaufnahme bildenden Sterntaschen zugeführt. Am Einlaufstern ist ein Überleitarm vorgesehen, der auf einem ersten Teilstück konzentrisch zum Einlaufstern und in einem anschließenden Teilstück konzentrisch zum Kreisel der Füllmaschine ausgebildet ist. Diese Ausgestaltung des mit dem Mündungsbereich der Flaschen zusammenwirkenden Überleitarmes ist aufwendig und teuer.

Bekannt ist weiterhin eine Transporteinrichtung für PE-Flaschen mit Halsring, die eine von einer geradlinigen Führung gebildete Förderstrecke, auf der die Flaschen mit ihren Halsring hängend mit Förderluft bewegt werden, und einen anschließenden Transportstem mit Aufnahmen zur ebenfalls hängenden Halterung der Flaschen an ihrem Halsring aufweist (JP 11 322 066). Ein Überleitarm, der mit den Flaschen im Bereich ihres Halsringes und/oder eines an den Halsring anschließenden Mündungsansatzes zusammenwirkt, ist bei dieser bekannten Transporteinrichtung nicht vorgesehen.

Aufgabe und Ziel der vorliegenden Erfindung ist es, für den Übergang von Behältern von einem Übergabestern zum Kreisel einer Behälterbehandlungsmaschine, insbesondere, aber nicht ausschließlich für Behälterbehandlungsmaschinen entsprechend der o.a. Anmeldungen, eine Überleitvorrichtung aufzuzeigen, welche die oben dargestellten Nachteile sicher vermeidet. Dazu sieht die vorliegende Erfindung vor, dass diese Übergabevorrichtung aus einem einfachen Führungselement besteht.

Im Nachfolgenden wird die Erfindung an Hand von in der Zeichnung dargestellten Ausführungsbeispielen näher erläutert.

Im Einzelnen zeigt die:

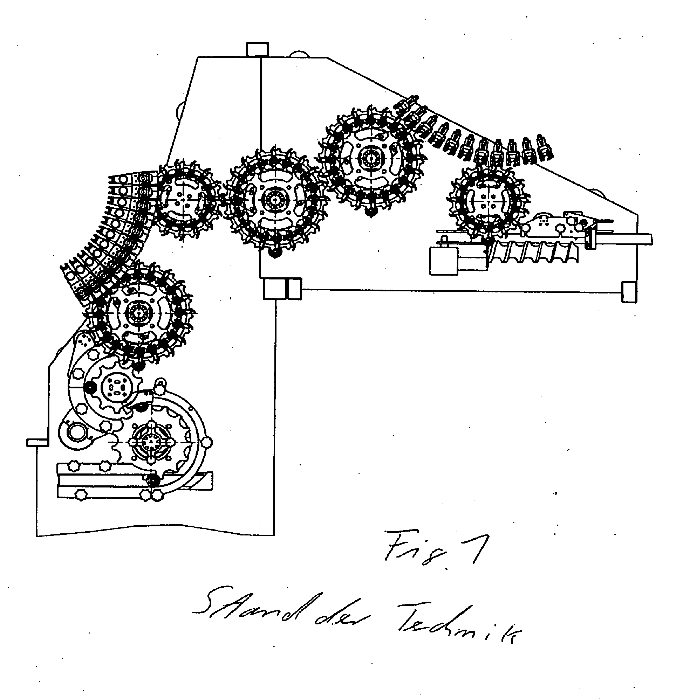

- Figur 1:: in einer stark vereinfachten Übersichtszeichnung zwei Behälterbehandlungsmaschinen, welche durch Einlauf-, Auslauf- und Transportsterne miteinander verkettet sind, wobei alle dargestellten Elemente zum Stand der Technik gehören, die
- Figur 2: ': in einer vereinfachten Draufsicht eine erfindungsgemäße Überleitvorrichtung in eingebautem Zustand, die
- Figur 3:: eine weitere Ausgestaltungsvariante mit einem an die Kontur von Halsring 13 und Mündungsansatz 12 angepassten Überleitarm 10 und die
- Figur 4:: eine weitere, vereinfachte Variante des Überleitarmes 10.

Weiterbildungen, Vorteile und Anwendungsmöglichkeiten der Erfindung ergeben sich aus der nachfolgenden Beschreibung von Ausführungsbeispielen und der Zeichnung. Gleichzeitig wird der Inhalt der Ansprüche zu einem Bestandteil der Beschreibung gemacht.

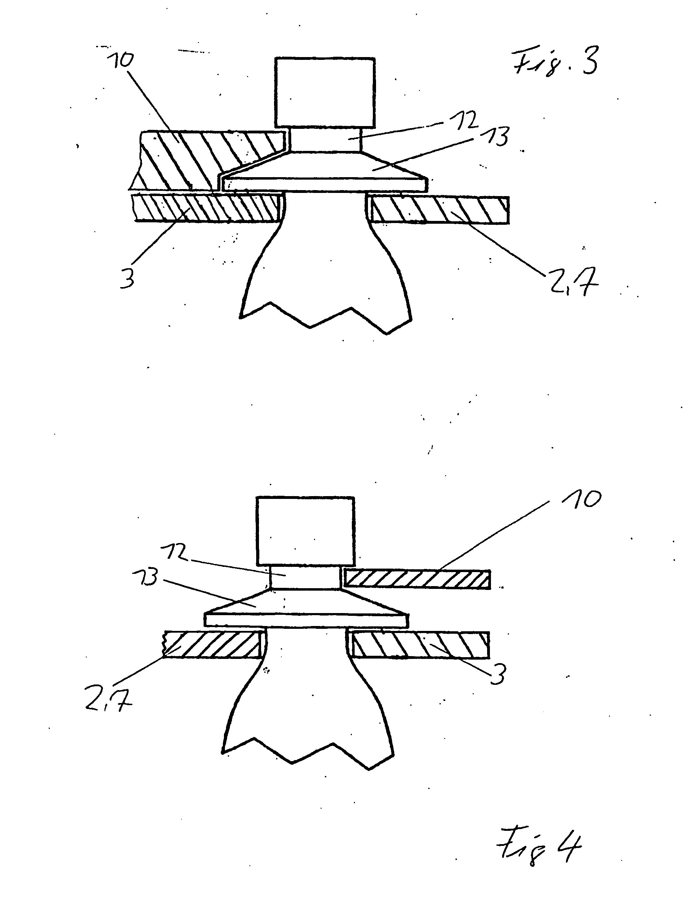

Die Figur 3 zeigt zunächst ein Kreissegment des Kreisels 2 einer Behälterbehandlungsmaschine 1, wobei es sich z.B. auch um einen Rinser oder aber auch um einen Verschließer handeln kann. Im dargestellten Ausführungsbeispiel handelt es sich um eine Füllmaschine umlaufender Bauart. Der umlaufende Teil der Füllmaschine, der so genannte Kreisel 2, ist um die Maschinendrehachse 5 drehbar ausgeführt.

Durch den Einlaufstern 3, welcher mit so genannten Sterntaschen 9 ausgestattet ist, werden die Behälter 6 der Behälterbehandlungsmaschine 1 zugeführt, wobei eine Außenführung 4 die Führung der Behälter 6 zumindest für einen bestimmten Streckenabschnitt unterstützt.

Zur Aufnahme der Behälter 6 in der Gefäßbehandlungsmaschine 1 sind am Kreisel 2 Aufnahmetaschen 7 vorgesehen, in welche die Behälter 6 unter Mitwirkung der Überleitvorrichtung 8 eingeschoben werden.

Das Einschieben geschieht zunächst dadurch, dass die Behälter 6 von dem kontinuierlich drehenden Einlaufstern 3 gegen die Überleitvorrichtung 8 gedrückt werden. Da die Überleitvorrichtung 8 feststehend und unbeweglich ausgebildet ist, wird der Behälter 6 mit fortschreitender Drehung von Kreisel 2 und Einlaufstern 3 aus der Sterntasche 9 heraus- und in die korrespondierende Aufnahmetasche 7 des Kreisels 2 hineingeschoben.

Die Überleitvorrichtung 8 besteht im Wesentlichen aus dem Überleitarm 10, welcher mittels einer nicht dargestellten Befestigungsvorrichtung ortsfest, also nicht mit dem Kreisel 2 umlaufend, an der Behälterbehandlungsmaschine bzw. ihren oder anderen ortsfesten Komponenten befestigt ist.

Für die Gestaltung des Überleitarmes 10 bestehen im Wesentlichen drei Möglichkeiten. Zunächst kann dieser in seinen geometrischen Abmessungen ausschließlich an die Gestalt des zwischen Halsring 13 und Gewinde des Behälters liegenden Mündungsansatzes 12 angepasst werden, wodurch sich besonders einfache Möglichkeiten zur Herstellung des Überleitarmes 10 ergeben. Dieser kann in diesem Fall z.B. auf einfache und preiswerte Art und Weise aus Blech, Kunststoff oder einem anderen geeigneten Werkstoff hergestellt werden. Beispielhaft ist eine solche Ausgestaltung in der Figur 4 dargestellt.

Ebenfalls kann der Überleitarm 10 ausschließlich an die Kontur bzw. den Durchmesser des Halsringes 13 angepasst sein.

Als Verbesserung der oben dargestellten Ausgestaltungsvariante besteht zusätzlich die Möglichkeit, wie in der Figur 3 dargestellt, den Überleitarm 10 komplett an die von Halsring 13 und Mündungsansatz 12 gemeinsam gebildete Kontur anzupassen. Durch diese Vorgehensweise wird eine verbesserte Führung und Überleitung des Behälters zwischen Einlaufstern 3 und Kreisel 2 bzw. Aufnahmetaschen 7 erreicht.
Bei dieser Variante bietet es sich an, den Überleitarm 10 nicht aus einem Blechwerkstoff, sondern aus einem geeignetem, aus Metall oder einem anderen Werkstoff bestehenden Vollmaterial zu fertigen.

Da die von Halsring 13 und/oder Mündungsansatz 12 gebildete Kontur, aber auch schon die Kontur bzw. der Durchmesser des Mündungsansatzes 12 von Behältertyp zu Behältertyp abweichen kann, ist es von besonderem Vorteil, zumindest den Überleitarm 10 leicht austauschbar auszuführen.

Ebenfalls ist es von Vorteil, die Flächen und/oder Kanten des Überleitarmes 10 welche mit denen sich bewegenden Behältern 6 in Berührung kommen, reibungsmindernd und/oder verschleißreduzierend zu beschichten. Dazu bietet sich z.B. eine Hartverchromung oder eine Beschichtung mit Wolframkarbid an.

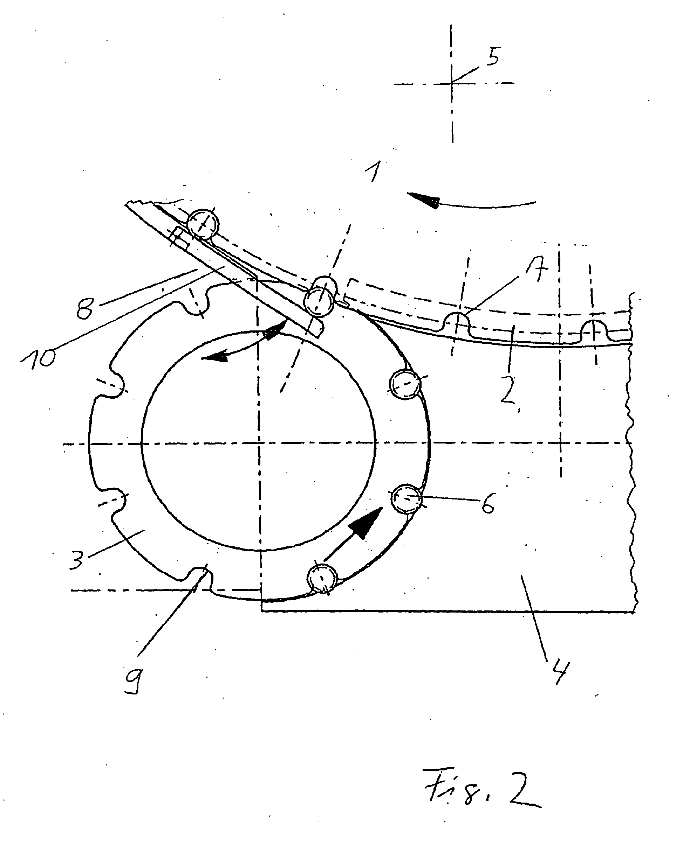

Abweichend von der in der Figur 2 dargestellten, im Wesentlichen halbkreisförmigen Ausbildung von Sterntaschen 9 und Aufnahmetaschen 7 kann, zur Verbesserung des Bewegungsablaufes und zur Vereinfachung des Überganges der Behälter 6 auch eine andere, vorteilhaftere Kontur der Taschen vorgesehen sein.

Nach dem Überleiten der Behälter 6 in den Kreisel 2 unterstützt eine ortsfeste, den Kreisel 2 zumindest teilweise umschließende Außenführung 11 die Führung der Behälter 6, wobei die Außenführung 11 gleichzeitig einen Teil des unteren Abschlusses eines Reinraumes bilden kann.

Zur Anpassung der hier vorgestellten Überleitvorrichtung 8 an unterschiedliche Behälterhals- bzw. Behälterhalsringdurchmesser ist vorgesehen, die Überleitvorrichtung 8 bzw. den Überleitarm 10 verstellbar auszuführen.

In einer weiteren, nicht beanspruchten Ausgestaltung der vorliegenden Erfindung ist vorgesehen, dass die Überleitvorrichtung 8, bzw. der Überleitarm 10 den Überleitvorgang durch aktive Bewegungen zusätzlich unterstützt und somit optimiert und zusätzlich beschleunigt, wodurch höhere Anlagenleistungen möglich sind.

Zur Realisierung dieser Funktion wird zumindest der Überleitarm 10 schwenkbar ausgeführt, wodurch dieser jeden Behälter durch eine aktive Bewegung von der Sterntasche 9 in die Aufnahmetaschen 7 überführt.

Als Antrieb für diese Schwenkbewegung können alle in der Technik bekannten und für diesen Anwendungsfall geeigneten Antriebsarten verwendet werden. Beispielhaft seien hier folgende Antriebsarten genannt: Pneumatikzylinder, Hydraulikzylinder, Dreh- und/oder Schwenkantriebe mit elektrischem oder hydraulischem oder pneumatischem Antrieb, (E-lektro)magnete mit anziehender und/oder abstoßender Kraftwirkung, auf dem Einlaufstern befindliche Steuernocken oder -kurven, Zug- und/oder Druckfedern auch in Verbindung mit Steuernocken oder -kurven.

Auf die Darstellung der konstruktiven Ausführung eines Antriebes für die Schwenkbewegung wurde verzichtet.

In einer weiteren, nicht beanspruchten Ausbildung der vorliegenden Erfindung ist vorgesehen, die Lage und/oder die Größe der Schwenkbewegung des Überleitarmes 10 einstellbar auszuführen, um die Überleitvorrichtung 8 an unterschiedliche Behälterabmessungen anpassen zu können. Auf eine Darstellung der dazu erforderlichen konstruktiven Maßnahmen wurde ebenfalls verzichtet.

## Patentansprüche

1. Behälterbehandlungsmaschine, wie Füller, Rinser oder Verschließer, für die Behandlung von Behältern (6), die jeweils mit einem eine Behältermündung aufweisenden Mündungsansatz (12) und mit einem an den Mündungsansatz (12) anschließenden Halsring (13) ausgebildet sind, mit einem um eine Maschinenachse umlaufend antreibbaren Kreisel (2) mit Aufnahmen (7) für die Behälter (6), mit einem ebenfalls Aufnahmen (9) für die Behälter (6) bildenden Einlaufstern (3) zum Zuführen der Behälter (6) an den Kreisel (2), sowie mit einem starren mit dem Mündungsansatz (12) und/oder dem Halsring (13) zusammenwirkenden Überleitarm (10) zum Überleiten der Behälter (6) aus den Aufnahmen (9) des Einlaufsternes (3) in die Aufnahmen (7) des Kreisels (2),
**dadurch gekennzeichnet, dass** die Aufnahmen (7) am Kreisel (2) sowie die Aufnahmen (9) am Einlaufstern (3) jeweils für eine hängende Halterung der Behälter (6) an ihrem Halsring (13) ausgebildet sind, und dass der Überleitarm (10) an die Außenkontur der Behälter (6) an ihren zwischen Halsring und Gewinde der Behälter Liegenden Mündungsansätzen (12) und/oder Halsringen (13) so angepasst ist, dass der Überleitarm (10) beim Überleiten gegen den zwischen Halsring und Gewinde des Behälters Liegenden Mündungsansatz (12) oder gegen den Halsring (13) oder gegen den zwischen Halsring und Gewinde des Behälters Liegenden Mündungsansatz (12) und den Halsring (13) anliegt.

2. Behälterbehandlungsmaschine nach Anspruch 1, **dadurch gekennzeichnet, dass** der Überleitarm (10) an die von dem Mündungsansatz (12) und dem Halsring (13) gebildete Kontur der Behälter (6) angepasst ist.

3. Behandlungsvorrichtung nach einem der vorhergehenden Ansprüche, **dadurch gekennzeichnet, dass** der Überleitarm (10) zumindest teilweise mit reibungsmindernden Mittel beschichtet ist.

4. Behandlungsvorrichtung nach einem der vorhergehenden Ansprüche, **dadurch gekennzeichnet, dass** der Überleitarm (10) zumindest teilweise mit verschleißmindernden Mitteln beschichtet ist.

## Claims

1. Container treatment machine, such as fillers, rinsers or sealers, for the treatment of containers (6), which are each provided with a mouthpiece extension (12), which has a container mouthpiece, and with a neck ring (13), which communicates with the mouthpiece extension (12), said machine having a rotor (2), which is drivable so as to rotate about a machine axis and has receiving pockets (7) for accommodating the containers (6), a starwheel arrangement (3), which also forms receiving pockets (9) for the containers (6) and serves to supply the containers (6) to the rotor (2), as well as a rigid transfer arm (10), which co-operates with the mouthpiece extension (12) and/or the neck ring (13) and serves to transfer the containers (6) from the receiving pockets (9) of the starwheel arrangement (3) to the receiving pockets (7) of the rotor (2), **characterised in that** the receiving pockets (7) on the rotor (2) and the receiving pockets (9) on the starwheel arrangement (3) are each configured to retain the containers (6) on their neck ring (13) in a suspended manner, and **in that** the transfer arm (10) is so adapted to the external contour of the containers (6) at their mouthpiece extensions (12), which are situated between the neck ring and thread of the containers, and/or at their neck rings (13) that the transfer arm (10), during the transfer operation, abuts against the mouthpiece extension (12), which is situated between the neck ring and thread of the container, or against the neck ring (13) or against the mouthpiece extension (12), which is situated between the neck ring and thread of the container, and the neck ring (13).

2. Container treatment machine according to claim 1, **characterised in that** the transfer arm (10) is adapted to the contour of the containers (6), which is formed by the mouthpiece extension (12) and the neck ring (13).

3. Treatment apparatus according to one of the preceding claims, **characterised in that** the transfer arm (10) is coated at least partially with friction-reducing means.

4. Treatment apparatus according to one of the preceding claims, **characterised in that** the transfer arm (10) is coated at least partially with wear-reducing means.

## Revendications

1. Machine de traitement de récipients, telle une soutireuse, rinceuse ou boucheuse, pour le traitement de récipients (6), qui sont pourvus respectivement d'un col d'embouchure (12) présentant une embouchure de récipient et une collerette (13) se raccordant à la saillie d'embouchure (12), avec un tourniquet (2) pouvant être entraîné en rotation autour d'un axe de la machine avec des logements (7) pour les récipients (6), avec une étoile d'entrée (3) formant également des logements (9) pour les récipients (6) pour amener les récipients (6) au tourniquet (2) ainsi qu'avec un bras de transfert (10) rigide coopérant avec le col d'embouchure (12) et/ou la collerette (13) pour transférer les récipients (6) des logements (9) de l'étoile d'entrée (3) aux logements (7) du tourniquet (2),
**caractérisée en ce que** les logements (7) au niveau du tourniquet (2) ainsi que les logements (9) au niveau de l'étoile d'entrée (3) sont réalisés respectivement pour une fixation suspendue des récipients (6) au niveau de leur collerette (13), et **en ce que** le bras de transfert (10) est adapté au contour extérieur des récipients (6) au niveau de leurs cols d'embouchure (12) situés entre la collerette et le filet des récipients et/ou leurs collerettes (13) de sorte que le bras de transfert (10) s'appuie lors du transfert contre le col d'embouchure (12) situé entre la collerette et le filet du récipient ou contre la collerette (13) ou contre le col d'embouchure (12) situé entre la collerette et le filet du récipient et la collerette (13).

2. Machine de traitement de récipients, selon la revendication 1, **caractérisée en ce que** le bras de transfert (10) est adapté au contour des récipients (6) formé par le col d'embouchure (12) et la collerette (13).

3. Dispositif de traitement selon l'une quelconque des revendications précédentes, **caractérisé en ce que** le bras de transfert (10) est au moins partiellement revêtu d'agents réduisant les frottements.

4. Dispositif de traitement selon l'une quelconque des revendications précédentes, **caractérisé en ce que** le bras de transfert (10) est revêtu au moins partiellement d'agents réduisant l'usure.
